# EUROPEAN PATENT SPECIFICATION

(11) **EP 3 787 545 B1**
(45) Date of publication and mention of the grant of the patent: **30.03.2022**
(21) Application number: 19724249.8
(22) Date of filing: 10.04.2019
(51) Int. Cl.: A61C 5/62

(54) **A DISPENSING GUN FOR DISPENSING A DENTAL MATERIAL**
AUSGABEPISTOLE ZUR AUSGABE EINES ZAHNMATERIALS
PISTOLET DE DISTRIBUTION DE MATÉRIAU DENTAIRE

(30) Priority: 04.05.2018 EP 18170750
(43) Date of publication of application: 10.03.2021
(73) Proprietor: 3M Innovative Properties Company, Saint Paul, Minnesota 55133-3427 (US)
(72) Inventor: PAUSER, Helmut, 82229 Seefeld (DE); PEUKER, Marc, 82229 Seefeld (DE)
(74) Representative: Vossius & Partner Patentanwälte Rechtsanwälte mbB
(86) International application number: PCT/IB2019/052960
(87) International publication number: WO 2019/211682

(56) References cited:
- EP-A1- 0 699 582
- WO-A1-98/26822
- WO-A1-02/064047
- US-B1- 6 312 254

## Description

### Field of the Invention

The invention relates to a dispensing gun for dispensing a dental material, and in particular a dispensing gun in which a plunger and a lever are permanently engaged with each other via a geared connection and providing ergonomics that allows maximizing the force applicable by the dispensing gun.

### Background Art

Dental materials are often provided in cartridges (sometimes also referred to as "capsules" in the field of dentistry) that are used in combination with a dental dispensing gun to dispense the dental material therefrom. Such cartridges typically have a container in which a piston is displaceably arranged. The dispensing guns typically have a plunger for displacing the piston into the container to urge the dental material toward a dispensing outlet.

There is a variety of dental materials having different properties and/or that are made for different dental applications. Amongst the different properties the viscosity or flowability of the dental material is particularly significant in connection with the dispensing of the dental materials. Some dental materials exhibit for example a relatively high viscosity with the consequence that the dispensation of the material requires relatively high forces. Further, the amount of material stored within a cartridge may vary depending on the particular type of dental material and the related application.

Dispensing guns are typically designed so that they can be used with a particular type of a cartridge. For example a dispensing gun may have an interface that is sized and shaped so that a corresponding type of a cartridge can be secured therein. Further, dispensing guns are typically designed so that they can be used with a maximum viscosity of a dental material and with a maximum amount of dental material filled within a cartridge. Thus, the same dispensing gun is typically also suitable for dispensation of lower viscos material and/or lower amounts.

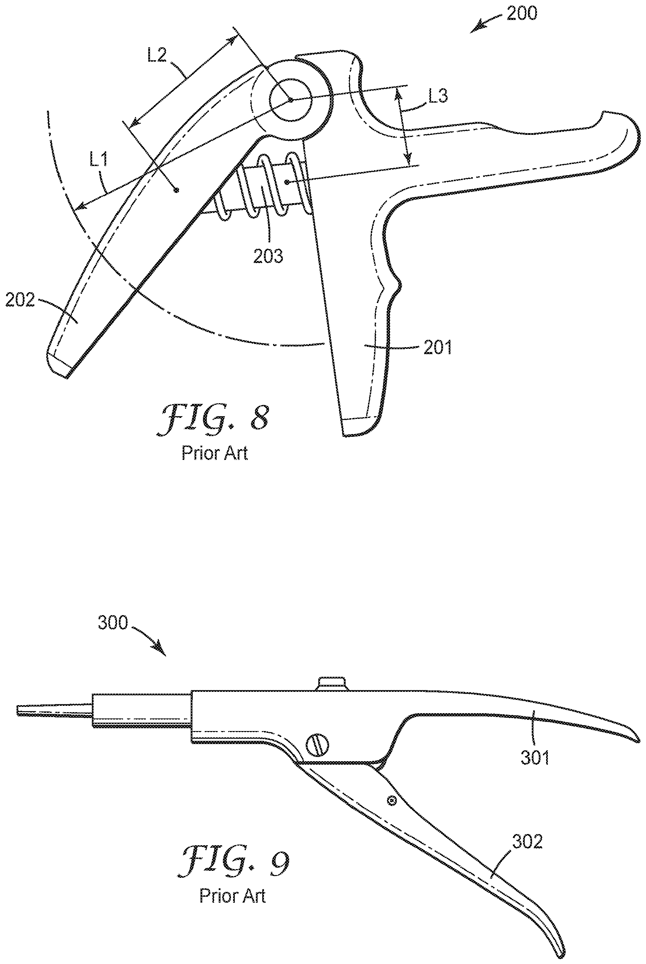

One principle type of dispensing gun that is widely used in dentistry is illustrated in Fig. 8. The dispensing gun 200 has a grip 201 and a lever 202 that is pivotable relative to the grip 201. Pivoting the lever 202 toward the grip 201 causes a plunger 203 to be displaced. The plunger 203 can move a piston in a cartridge (not shown) forward to dispense the dental material. The dispensing gun 200 is for example suitable for dispensing dental composite filling materials. Generally, the dispensing gun 200 works well with various types of dental composite materials. The dispensing gun 200 is particularly advantageous in that it allows to displace the plunger normally over the full travel that is needed to empty a cartridge with a single continuous pivot of the lever 202 relative to the grip 201. However, as indicated in the Figure by the distances L1, L2 and L3 the force transmission between a force acting on the lever 202 and the plunger 203 is non-uniform over the pivot range of the lever 202. In the situation as shown (initial position of the lever 202) the force acting on the lever 202 is transmitted via the distance L1 and L2. The smaller L2 is, the higher is the force transmission on the plunger 203. As the lever 202 is pivoted further toward the grip 201 the force acting on the lever 202 is transmitted via the distance L1 and L3. L3 is smaller than L2 so that in a position of the lever 202 farther toward the grip 201 the force transmission on the plunger 203 is higher than in the initial position. This means that the force transmittable by the plunger increases as the lever 202 is pivoted further toward the grip 201. From this it further follows that in the initial position (in which sometimes an additional breakaway force has to be overcome) the force conditions provided by the dispensing gun may by disadvantageous in case high viscous materials would be used. Further, due to the non-uniform force transmission over the pivot range a user has to control the dispensation speed carefully to achieve a uniform extrusion of the dental material.

Another dispensing gun used in dentistry is illustrated in Fig. 9. Again the dispensing gun has a grip 301, a lever 302 and a plunger (not shown). The dispensing gun 300 is designed for dispensing dental material at relatively high forces. Therefore the force transmission ratio between a force exerted on the lever 302 and the resulting force provided by the plunger is maximized. As a disadvantage a single pivot of the lever 302 toward the grip 301 displaces the plunger over an increment only. To move the plunger over the full travel needed to empty a cartridge, multiple pivots of the lever 302 are needed. Therefore dispensing of a uniform and continuous strand of dental material may be difficult.

US 6,312,254 B1 (Friedman) describes a dispenser for controllably heating a compule of dental material removably inserted in the dispenser.

WO 98/26822 A1 (von Schuckmann) describes a cartouche for a hand operable ejector device which dislocates a tappet, with back piston-locked filling a medical substance and a front mouth piece with an opening, and a back holding section for accommodating the cartouche in the ejector device.

WO 02/064047 A1 relates to a dental device for the placement of dental materials, and more particularly to a dental syringe device having an improved barrel front end portion for the extrusion of dental cartridges containing dental materials. The device comprises a rod in the barrel front which is forced against the cartridge thereby maintaining the cartridge in position during use.

Accordingly, although existing dispensing guns have certain advantages there is still a need to provide a dispensing gun that provides for a convenient handling and that can be used with dental materials having different properties.

### Summary of the Invention

The invention relates to a dispensing gun for dispensing a dental material according to claim 1. The dispensing gun comprises a body that toward a front end of the dispensing gun has a receptacle for receiving a cartridge in the receptacle. The body toward a rear end of the dispensing gun further has a grip for holding the dispensing gun. The dispensing gun further comprises a plunger that is displaceable relative to the receptacle. Furthermore the dispensing gun comprises a lever. The lever is pivotally suspended relative to the body for pivoting relative to the grip about a pivot axis. The plunger has a linear toothing. Further the lever has an annular gear segment. The linear toothing and the annular gear segment are permanently engaged with each other so that any pivot of the lever in a first direction causes the plunger to displace forward and any pivot of the lever in an opposite second direction causes the plunger to displace backward. The lever is pivotable by a pivot angle between a forward extreme position and a backward extreme position. The lever has a front gripping face that faces toward the front end of the dispensing gun. Further the grip has a rear gripping face that faces toward the rear end of the dispensing gun. The front and rear gripping face-along a radial direction away from the pivot axis - extend progressively away from each other.

The term "progressively" means that the front and rear gripping face do not only follow a V-shape in which the legs of the V run straight away from each other. Rather the front and rear gripping face preferably follow a shape in which the legs of the V are curved away from each other.

The invention is advantageous in that it provides for a dispensing gun that provides for a maximized force for dispensing the dental material (also referred to "extrusion force") when operated by hand force of a user. Further the invention is advantageous in that it provides for a dispensing gun that has a uniform force transmission ratio over a full pivot range of the lever. In addition the dispensing gun allows for displacing the plunger over its full range by a single pivot over the full pivot range of the lever. The invention is further advantageous in that it provides for a dispensing gun that enables a cartridge to be fixedly secured therein and still allows rotational positioning of the cartridge relative to the grip part after. Hence the dispensing gun of the invention combines optimized extrusion performance and convenient handling.

The lever preferably extends toward a free end and may comprise a front bulge adjacent the free end. The front bulge preferably forms part of the front gripping face. Further the front bulge is preferably oriented toward the front end of the dispensing gun. The grip preferably extends toward a free end and may comprise a rear bulge adjacent the free end. The rear bulge preferably forms part of the rear gripping face. Further the rear bulge is preferably oriented toward the rear end of the dispensing gun. Thus, in case the lever is positioned in the backward extreme position the front and rear bulge in combination maximize the dimension formed between the front and rear gripping face. This allows a user of the dispensing gun to exert maximized forces on the lever over the full range between the forward extreme position and the backward extreme position. On the other hand, if the lever is positioned in the forward extreme position a minimized dimension is formed between the front and rear gripping face at areas outside the front and rear bulge. These areas can be still easily grasped by a user.

In an embodiment the body comprises a grip part and a mouth part. The grip part and the mouth part are preferably inseparably and rotatably connected relative to each other. The term "inseparably" thereby means that the mouth part and the grip part cannot be separated without damaging or destroying the one or both of the mouth part and the grip part. The mouth part may have an indicator for indicating that the mouth part is rotatable relative to the grip part. The indicator may comprise, for example, an arrow. The indicator may be laser engraved in the mouth part.

The lever is preferably suspended at or within the body by a pivot. In particular the lever is preferably suspended at or within the grip part by a pivot. The pivot may be formed by two pins that are arranged at the lever and corresponding recesses formed within the body, in particular formed within the grip part. Preferably the pins do not extend entirely through the grip part. The pins are preferably rotatably engaged within the recesses so as to provide the pivot. The recesses preferably form entries into the grip part through which (entries) the lever with the pins can be inserted from outside into the recesses. Further the recesses preferably are groove shaped each having a stepped bottom with a first bottom portion between the step and the entry and a second bottom portion formed between the step and an end opposite of the entry. The recesses are preferably arranged on opposite sides within walls formed by the grip part. The walls are preferably spaced and exhibit inner wall surfaces that face each other. Further, the stepped bottoms of the recesses face each other. The distance between the opposing first bottom portions preferably decreases from the entries toward the steps. Further, the distance between the opposing second bottom portions is greater than the distance between the opposing first bottom portions at (or adjacent) the step. Thus for mounting the lever to the grip part the lever can be pushed into the grip part with the pins entering the entries and sliding within the recesses. Once the pins overcome the steps of the stepped bottoms the pins snap behind the steps. Thus the lever can be fixedly and pivotably retained with the body, in particular with the grip part.

According to the invention the linear toothing and the annular gear segment in combination form a gear transmission having a gear transmission ratio in the range of 15 to 18 mm or 16 to 18 mm or 17 to 18 mm displacement of the plunger per 65 degrees pivot angle of the lever. A gear transmission ratio of 18 mm displacement of the plunger per 65 degrees pivot angle of the lever is sometimes preferred. Thus, the dispenser allows for emptying many types of cartridges as they are established on the market.

The pivot range between the forward and the backward extreme position of the lever preferably defines the full pivot range of the lever. Further, the plunger is preferably displaceable between a forward extreme position and a backward extreme position. The displacement range between the forward and the backward extreme position of the plunger defines the full displacement range of the plunger.

In an embodiment, a pivot of the lever from the forward extreme position to the backward extreme position causes the plunger to displace from the backward extreme position to the forward extreme position. Thereby the pivot of the lever from the forward extreme position to the backward extreme position is directed backward and does not comprise any pivot forward. In particular a pivot of the lever from the forward extreme position to the backward extreme position preferably causes a displacement of the plunger in the range of 15 to 18 mm, wherein a displacement of about 18 mm is sometimes preferred. Therefore, the dispensing gun enables that the plunger can be displaced over the full displacement range by a single pivot of the lever from the forward extreme position to the backward extreme position.

Further, due to the geared connection between the lever and the plunger the displacement of the plunger is proportional to the pivot angle of the lever. Therefore the transmission ratio between the lever and the plunger is uniform over the full pivot range of the lever.

In the forward extreme position the lever is located closer toward the front end of the dispensing gun than in the backward extreme position of the lever. Further, in the forward extreme position the plunger is located closer toward the front end of the dispensing gun than in the backward extreme position of the plunger. The front end of the dispensing gun is the end that comprises the receptacle for receiving the cartridge therein. The rear end of the dispensing gun is defined by the end of the dispensing gun opposite of the front end. Accordingly the term "forward" as used herein refers to a direction from the rear end of the dispensing gun toward the front end of the dispensing gun, and the term "backward" as used herein refers to a direction from the front end of the dispensing gun toward the rear end of the dispensing gun.

In one embodiment the dispensing gun further comprises a spring. The spring is preferably arranged to permanently urge the plunger backward. Thus the spring per default automatically positions the plunger in the backward extreme position. Preferably the spring is further arranged to allow a forward displacement of the plunger against spring load. The spring may be arranged to act directly on at least one of the lever and the plunger. For example the spring may act directly on the lever, thus urging the lever toward the forward extreme position so that via the geared connection between the lever and the plunger the plunger is urged toward the backward extreme position. Alternatively (or additionally) the spring may act directly on the plunger, thus urging the plunger toward the backward extreme position. In this case via the geared connection between the lever and the plunger the lever is urged toward the forward extreme position. Preferably the spring is mounted in the dispensing gun so that it is under pre-tension in the backward extreme position of the plunger.

In one embodiment the spring is a torsion spring. One end of the torsion spring may be attached to the annular gear segment and the other end of the torsion spring may be attached to the body of the dispensing gun. Alternatively a tension or pressure spring may be used.

The grip part and the mouth part are preferably rotatable or twistable relative to each other about a longitudinal axis. The longitudinal axis is preferably defined by an axis along which the plunger is displaceable. The mouth part preferably has a front end that comprises the receptacle and a rear end that comprises a retention structure. The retention structure is preferably an annual structure like a circumferential rim. Thus the retention structure provides for axially (about the longitudinal axis) fixing the mouth part within the grip part but enabling rotatability of the mouth part and the grip part relative to each other. The front end of the mouth part preferably corresponds to the front end of the dispensing gun. The mouth part preferably has a tubular structure with a through-passage extending therethrough along the longitudinal axis. At least the rear end of the mouth part and the retention structure are preferably embedded in the grip part. This means that a rear portion of the mouth part that includes the rear end and also the retention structure is preferably embedded in the grip part. Accordingly the present dispensing gun provides for a rotatable mouth piece although the plunger is not rotatable relative to the lever (due to the gear transmission established between the plunger and the lever).

With reference to a dimension parallel to the longitudinal axis the recesses preferably extend in a direction away from the front end of the dispensing gun. Thus forces occurring during dispensing dental material do not cause the lever to be pushed off the recesses.

In one embodiment the dispensing gun comprises a click-stop mechanism which provides for the mouth part to snap into certain predetermined angular positions during twisting. For example, the click-stop mechanism may provide for a snap stop every 45 degrees, every 30 degrees or every 15 degrees. This means for example, for the snap stop every 45 degrees, that the mouth part can be snapped into eight different angular positions over an angular range of 360 degrees. Other pitches of the snap stops can be provided as appropriate. Preferably the snap stops are uniformly distributed over the angular range or 360 degrees over which the mouth part can be twisted relative to the grip part. The click-stop mechanism may be provided by flats at the retention structure of the mouth part. For example the retention structure may have a square, hexagonal or octagonal shape or may have a number of flats, for example four, six, eight or twelve flats that are uniformly distributed and facing radially away from the longitudinal axis. Once over-molded the retention structure can be still rotated. However because the portion of the grip part that encloses the retention structure has assumed the negative shape of the retention structure the mouth part will preferably stop in positions in which the flats align with each other.

In one embodiment the grip part is injection-molded from a plastic material. Suitable plastic materials include for example PPA (polyphthalamide) or PPSU (polyphenylsulfone), optionally fiber reinforced at a ratio of 10% to 20% glass fibers by weight, preferably 16% glass fibers by weight. The mouth part can be made of metal. Alternatively, or sometimes preferred, the mouth part is made of plastic. If desired, the same plastic (also in reinforced form) as described above for the grip part can be used. A metal as it may be used with the present invention includes for example stainless steel or titanium. Preferably the mouth part is at least partially over-molded by the plastic material. In particular the rear portion of the mouth part may be over-molded by the plastic material with the remainder of the mouth part protruding out of the grip part. The grip part preferably forms a back end of the dispensing gun and a back end of the body. Thus, the mouth part protrudes out of the grip part toward the front end of the dispensing gun and the front end of the body. The grip preferably is formed by the grip part. The grip allows a user to grasp and hold the dispensing gun during use. Further, the grip forms a support relative to which the lever can be urged. Typically the dispensing gun is held in one hand between the ball of the hand and the fingers, and the lever is pulled toward the grip by the fingers. In the backward extreme position of the lever the lever is located closer to the grip (or adjacent the grip) than in the forward extreme position. Therefore relative to a situation in which the lever is in the forward extreme position the hand position is typically different in the backward extreme position. It has been found that typically the forces that can be exerted on the lever depend of the distance between the lever and the grip. A larger distance typically results in a lower force. On the other hand a too small distance typically also results in a lower force that can be exerted on the lever. Therefore a maximized force can be typically exerted within a certain distance range between the lever and the grip.

In one embodiment the receptacle has a slit that extends into the mouth part. The slit allows the receptacle to temporarily and elastically widen and thus to snap a cartridge into the receptacle. Further the slit enables the use of metal for the mouth part with an elastically deformable receptacle.

In one embodiment the dispensing gun further comprises a heat protective sheath for at least partially enclosing or covering the metal mouth part. For some dental treatments the mouth part may be pre-heated to a temperature of up to 65 °C to cause the dental material to soften. During intra-oral use of the dispensing gun the heat protective sheath may be used to prevent direct contact between a patient's tissue and the pre-heated metal mouth part. Although the heat protective sheath may assume the same or a similar temperature as the mouth part, it typically thermal transfer to a patient's tissue can be minimized due to the plastic material. The heat protective sheath may be a hollow-cylindrical plastic barrel made of the same plastic as the dispensing gun. Thus the heat protective sheath may be disinfected by the same means as the dispensing gun.

In one embodiment the dispensing gun comprises an air channel. The air channel preferably has a first portion extending through the body and a second portion extending through the plunger. The plunger and the body in combination may form a linear slide valve for interrupting or establishing fluid communication between the first and second portion of the air channel dependent on a displacement of the plunger. Thus, the dispensing gun may provide for air to be supplied to a cartridge inserted in the receptacle of the dispensing gun.

In one embodiment the fluid communication between the first and second portion is interrupted in the forward extreme position of the plunger (and the lever) and established upon displacement of the plunger forward. Accordingly the dispensing gun may provide for air to be supplied to a cartridge inserted in the receptacle of the dispensing gun when the lever is pivoted out of the forward extreme position, whereas the air supply is suspended when the lever is located within the forward extreme position.

The invention further relates to a system that comprises a dispensing gun for dispensing a dental material as disclosed herein (optionally in the form of any of the embodiments disclosed) and a cartridge. The cartridge comprises a chamber within which the dental material is contained and a piston that closes the chamber. The cartridge further has an outlet nozzle for releasing the dental material. The outlet nozzle may be provided with a closure cap during transportation or storage of the capsule.

In one embodiment the receptacle of the dispensing gun is configured to receive a retention end of the cartridge via a snap connection. The cartridge typically has a cylindrical outer shape with an annular retention rim at a rear end of the cartridge. The rear end of the cartridge is the end that is closed by the piston and an opposite front end of the cartridge is formed by the outlet nozzle.

The invention further relates to a method of making a dispensing gun for dispensing a dental material. The dispensing gun may particularly comprise a body that has a receptacle for receiving a cartridge therein, a plunger that is displaceable relative to the receptacle, and a lever that is suspended pivotally relative to the body. The plunger may have a linear toothing and the lever may have an annular gear segment. The linear toothing and the annular gear segment are preferably permanently engaged with each other so that any pivot of the lever in a first direction causes the plunger to displace forward and any pivot of the lever in an opposite second direction causes the plunger to displace backward. Any of the embodiments as described herein may be implemented in the dispensing gun made by the method.

The method comprises the steps of providing a mouth part made of metal in an injection mold and over-molding at least a portion of the mouth part by a plastic material. The over-molding is preferably performed during molding a grip part as described herein. Preferably the mouth part is inserted in the mold so that a mold cavity is formed around only a rear portion of the mouth part. Because the mouth part is made of plastic or metal no cohesion between the metal and the plastic material is created by over-molding. Accordingly the mouth part generally remains movable except for a positive lock is provided by the shape of the mouth part. Preferably the rear end of the mouth part is rotationally symmetric about the dispensing axis but comprises a circumferential rim (around the dispensing axis). Therefore the mouth part remains twistable about the dispensing axis but is axially (with respect to the dispensing axis) locked within the grip part. Due to the over-molding the mouth part is preferably axially inseparably locked within the grip part.

In an embodiment the method further comprises the step of providing a plunger that has a linear toothing. The method may further comprise the step of pre-mounting the plunger and the mouth part. In particular the plunger may be inserted within the mouth part. Further, the step of over-molding is preferably based on the pre-mounted mouth part and plunger.

### Brief Description of the Figures

- Fig. 1: is a perspective view of a system according to an embodiment of the invention;
- Fig. 2: is a cross-sectional view of a dispensing gun according to an embodiment of the invention;
- Fig. 3: is a partial perspective view of the dispensing gun shown in Fig. 2;
- Fig. 4: is a perspective view of a cartridge of a system according to an embodiment of the invention;
- Fig. 5: is a cross-sectional view of a system according to an embodiment of the invention;
- Figs. 6, 7: are cross-sectional views of a system according to an embodiment of the invention;
- Figs. 8, 9: are illustrations of dispensing guns of the Prior Art; and
- Fig. 10: illustrates dimensions of a dispensing gun according to an embodiment of the invention.

### Detailed Description of the Invention

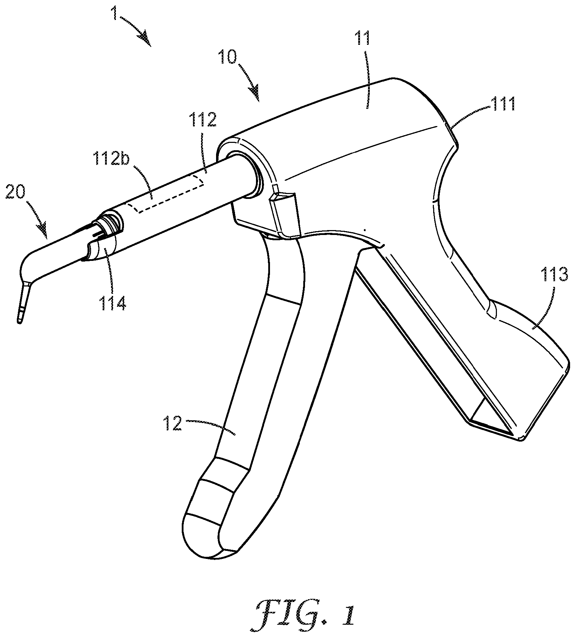

Fig. 1 shows a system 1 that comprises a dispensing gun 10 and a cartridge 20. The cartridge 20 contains a dental material. The cartridge 20 is retained in the dispensing gun 10. The dispensing gun 10 can be operated for dispensing the dental material from the cartridge 20.

The dispensing gun 10 particularly has a body 11 which comprises a grip part 111 and a mouth part 112. The grip part 111 forms a grip 113 for grasping the dispensing gun 10 by a user.

The body 11, in particular the mouth part 112, that has a receptacle 114 within which the cartridge 20 is received. The cartridge 20 is particularly removably retained within the receptacle 114. Therefore the dispensing gun 10 can be re-used with multiple disposable cartridges. Further, the cartridge 20 is retained within the receptacle 114 by a snap connection as described further below. The snap connection allows for securing the cartridge 20 in the dispensing gun 10 by just snapping the cartridge 20 in the receptacle 114.

The dispensing gun 10 has a lever 12 that is that is pivotally suspended at the body 11. The lever 12 can be pivoted for dispensing the dental material from the cartridge 20. In the Figure, for dispensing the dental material the lever 12 can be pivoted in a direction toward the grip 113 for dispensing the dental material.

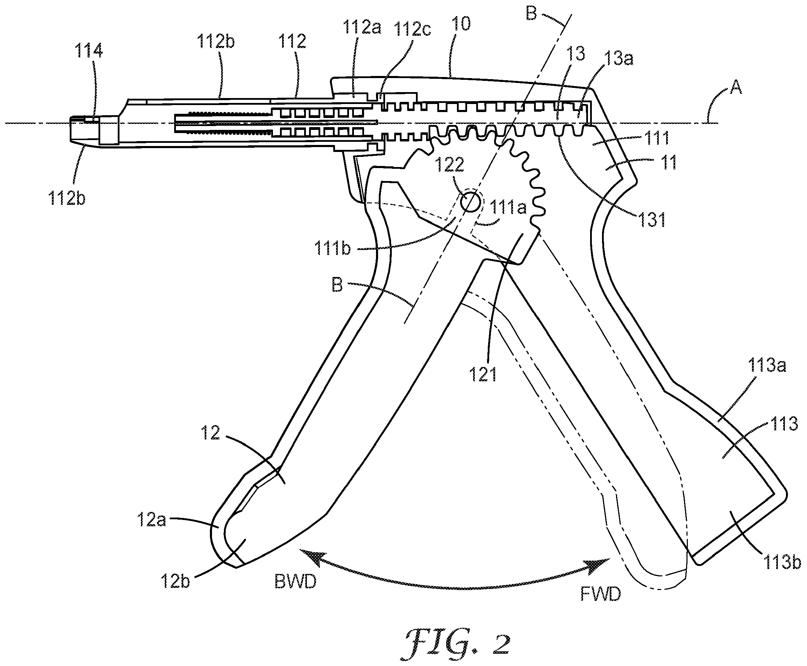

The mouth part 112 of the dispensing gun 10 may have a window 112b. Through the optional window 112b a plunger 13 (shown in Fig. 2) can be observed. The plunger may have an indicator, for example a colored bar, the position relative to the window of which may be used to conclude on the remaining fill level of the cartridge 20. Optionally one or more marks may be provided adjacent the window which can be compared to the position of the indicator to evaluate the remaining fill level in the cartridge 20.

Fig. 2 shows the dispensing gun 10 in more detail. In particular, the body 11 comprises the plunger 13. The plunger 13 is displaceably arranged within the body 11. In particular the plunger 13 is guided within the body 11 for a linear displacement along a dispensing axis A. The plunger 13 is provided for urging the dental material in the cartridge (not shown) forward. The plunger 13 is directly coupled with lever 12 so that a pivot of the lever 12 causes a linear movement of the plunger 13.

The lever 12 is pivotally suspended for pivoting between a forward extreme position (shown in the Figure) and a backward extreme position (indicated by dot-dashed lines in the Figure). In the backward extreme position the lever 12 is positioned further toward the grip 113 or adjacent the grip 113.

The plunger 13 is provided with a linear toothing 131. The linear toothing 131 extends parallel to the dispensing axis A. The linear toothing 131 is arranged adjacent a rear end 13a (or forms the rear end 13a) of the plunger 13. Further, the lever 12 has an annular gear segment 121 which is in engagement with the linear toothing 131. Accordingly the linear toothing 131 and the annular gear segment 121 in combination form a gear transmission with each other. Therefore pivoting of the lever 12 causes the plunger 13 to displace by means of the gear transmission that is established between the lever 12 and the plunger 13. For example, in case the lever 12 is pivoted in a first direction "FWD" (see Figure) the plunger 13 displaces forward and in case the lever 12 is pivoted in an opposite second direction "BWD" (see Figure) the plunger 13 displaces backward. The gear transmission between the lever 12 and the plunger 13 is permanent. This means that particularly no clutch, freewheel or other means for disengaging or decoupling the annular gear segment 121 and the toothing 131 from each other is provided. And no clutch, freewheel or other means for disengaging or decoupling the lever 12 and the plunger 13 from each other is provided. Rather, the gear transmission is configured such that any pivot of the lever 12 causes a coactive displacement of the plunger 13. In particular, the gear transmission is configured such that a pivot of the lever 12 from the forward extreme position to the backward extreme position causes the plunger 13 to displace sufficiently to entirely empty a cartridge that is inserted in the dispensing gun 10. This enables the dispensation of the dental material without intermediate stop or interruption, for example to dispense a uniformly shaped strand of dental material. Further, the absence of a clutch or other disengagement means helps maximizing the robustness of the dispensing gun and helps minimizing manufacturing costs.

The mouth part 112 has a rear end 112a that is rotatably arranged at or within a front end 111b of the grip part 111. The rotatability is provided about the dispensing axis A. Thus the mouth part 112 can be rotated for adjusting an orientation of the cartridge 20 about the dispensing axis A, for example as desired during treatment of a patient. The rotatable connection between the mouth part 112 and the grip part 111 may be comprise a click-stop mechanism that provides for the mouth part 112 and the grip part 111 to snap in predetermined angular positions relative to each other, and that further enables the positioning of the mouth part 112 and the grip part 111 in intermediate angular positions relative to each other. The mouth part 112 further has a retention structure 112c which axially fixes the mouth part within the grip part 111. The retention can be also be realized through over-molding of the grip part 111 over the retention structure 112c or with a snap fit or other retention means like a pin or preferably a snap on disc, preferably out of metal.

The lever 12 and the grip 113 extend V-shaped, and each of the lever 12 and the grip 113 extend non-linear. In particular the lever 12 and the grip 113 each have a front bulge 12a and a rear bulge 113a, respectively. The front and rear bulges 12a, 113a provide for a maximized distance between outer opposite surfaces (= front gripping face and rear gripping face) of the lever 12 and the grip 113 in the backward extreme position of the lever 12. Thus the front and rear gripping face extend progressively away from each other. It has been found that such a distance allows a user holding the dispensing gun 10 to exert maximized forces in the backward extreme position of the lever 12. On the other hand the user can also exert maximized forces in the forward extreme position of the lever 12 because of the V-shaped arrangement of the lever 12 and the grip 113 and because the remainder of the lever 12 and the grip 113 is recessed. Thus the user can grasp the lever 12 and the grip 113 at a location closer toward the cusp of the V-shape where the distance between the opposite outer surfaces of the lever 12 and the grip 113 is smaller than the distance at areas toward the free end 12a of the lever 12 and the free end 113b grip 113.

The lever 12 is suspended within the grip part by a pivot. The pivot is formed by two pins 122 (one being only visible in this view) that are arranged at the lever 12. The grip part has recesses 111a (not visible but indicated in dashed lines) in which the pins 122 are rotatably engaged. The recesses 111a are groove shaped and open toward an outside of the grip part 111. Thus the lever 12 can be pushed into the grip part 111 for mounting, with the pins 122 inserting in the recesses 111a. The recesses extend along a mounting axis B which is inclined relative to the longitudinal axis A. Further the recesses 111a are oriented such that the open sides 111b of the recesses 111a face in a direction of the free end 12a of the lever. The free end 12a of the lever 12 is the end opposite of the end of the lever that forms the pins 122. The included angle between the mounting axis B and the longitudinal axis A in the example is 60 degrees (measured between the mounting axis B and the longitudinal axis A at an area between the mouth part 112 and the lever 12). Due to the orientation of the recesses 111a the pins 122 are urged away from the open sides 111b of the recesses during dispensation of dental material. Thus mounting of the lever by just pushing it into the grip part 111 is enabled and inadvertent dismounting during dispensation of dental material is prevented.

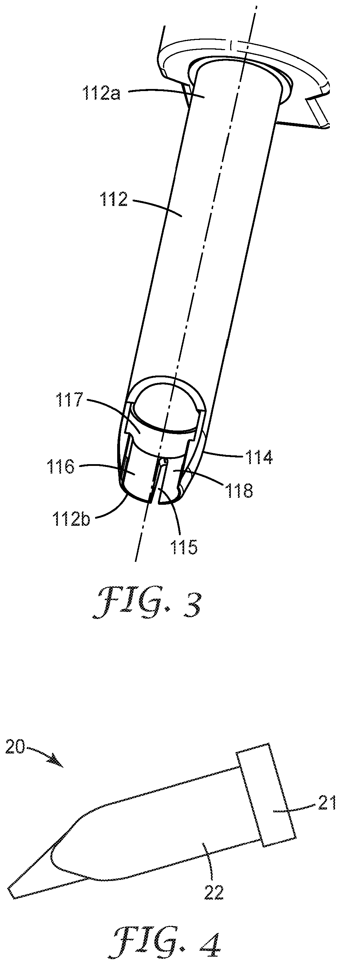

Fig. 3 shows a partial view of the mouth part 112 with the receptacle 114. The receptacle 114 is provided adjacent a front end 112b of the mouth part 112. The receptacle 114 has first section 116 and a second section 117. The first and second section 116, 117 are half-pipe-shaped or trough-shaped. The first section 116 has or is based on a smaller diameter than the second section 117. Thus a cartridge 20 (shown in Fig. 4) having a cartridge body 20 and a retention rim 21 can be retained in the receptacle 114 with the cartridge body 22 placed in the first section 116 and with the retention rim 21 placed in the second section 117. Thus the cartridge 20 is axially secured during dispensation of the dental material in that the retention rim 21 is held by a step formed between the first and second section 116, 117.

The first section 116 is shaped so that it encloses the cartridge body 20 partially. In the example the first section 116 has a partially cylindrical shape. In particular the receptacle 114 has an entry slot 118 that opens the receptacle 114 in a dimension radially of the dispensing axis A. The slot 118 has a width that is slightly smaller than the cartridge body so that the cartridge is snapped into the receptacle through the slot 118.

The mouth part 112 is made of metal, in the example of stainless steel. A slit 115 extends from the front end 112b into the mouth part 112 and into the receptacle 114. The slit 115 enables the receptacle 114 to temporarily elastically deform (widen and reset) as the cartridge 20 is snapped into the receptacle 114 through the slot 118.

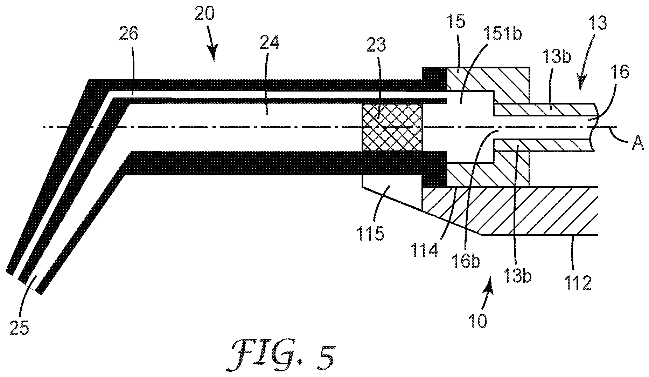

Fig. 5 is a view of the cartridge 20 and a portion of the dispensing gun 10. The cartridge 20 is inserted in the receptacle 114 of the mouth part 112. The cartridge 20 has a piston 23 that closes a chamber 24 in which the dental material (not illustrated) is contained. The piston 23 is movable along the dispensing axis A. In particular, the piston 23 can be moved by the plunger 13 of the dispensing gun 10. For dispensation of the dental material a user can push the lever (not shown in this Figure) backward so that the plunger 13 displaces forward. A front end 13b of the plunger 13 thereby displaces into the cartridge 20 and moves the piston 23 forward. As a consequence the dental material is urged toward an outlet nozzle 25 and dispensed therefrom.

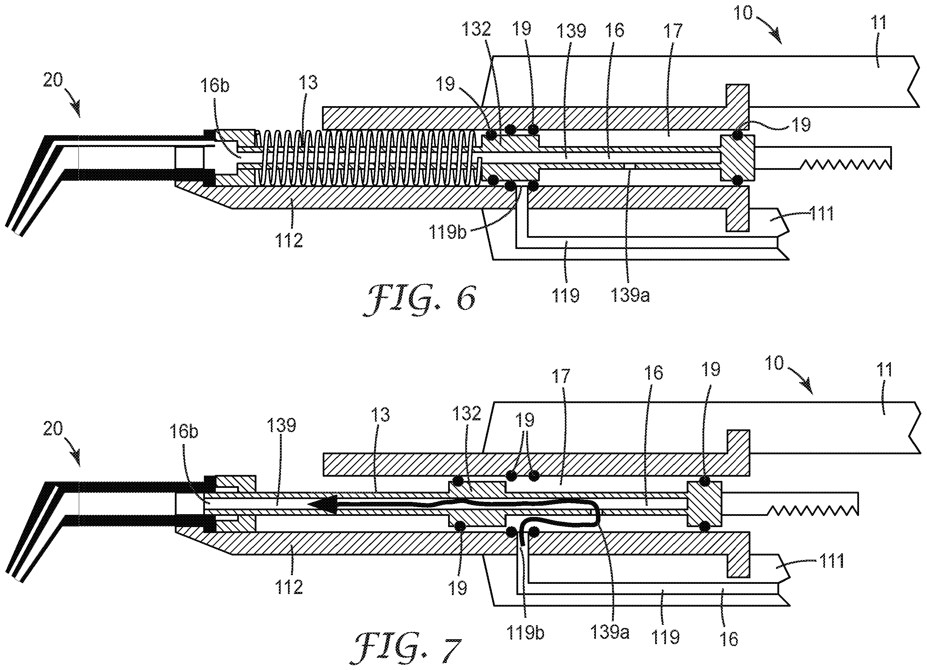

In the example the cartridge 20 has an optional air conduit 26. The air conduit 26 is connected to an optional air output 151b of the dispensing gun 10 as described in further detail below. The air conduit 26 is provided for guiding air toward an area adjacent the outlet nozzle 25. The air can be used for example for drying tissue in a patient's mouth during a dental treatment. The air output 151b is formed by a seal 15 that seals with the cartridge 20 and the plunger 13 to establish fluid communication between the cartridge 20 and the plunger 13. A spring 18 (illustrated in Fig. 6) is provided on the plunger 13 for urging the seal 15 toward the cartridge 20. The air output 151b can be supplied with air via an air channel 16 through the dispensing gun 10, which (channel 16) forms an air outlet 16b at the front end 13b of the plunger 13.

Figures 6 and 7 are views a portion of the dispensing gun 10 in combination to illustrate an air flow and air control through the dispensing gun 10. In particular the plunger 13 and the body 11 in combination form a valve for switching the air supply to the air outlet 16b on or off. Fig.6 illustrates a situation in which the air supply is switched off, and Fig. 7 illustrates a situation in which the air supply is switched on. The air channel 16 has a first portion 119 that extends through the body 11 and a second portion 139 that extends through the plunger 13. The first portion 119 particularly extends through the grip portion 111 and through the mouth portion 112 and forms an outlet orifice 119b within the mouth part 112. The mouth part 112 forms an inner cylinder face within which the plunger 13 is slidably accommodated. The outlet orifice opens within the inner cylinder surface. The plunger 13 has a bulge 132 that snugly and sealingly fits with the inner cylinder face of the mouth part 112. Eventually, as in the example, sealing rings 19 may be provided at the plunger 13 and/or the mouth part 112. The sealing rings 19 provide for a good sealing between the plunger 13 and the mouth part 112. In the situation shown in Fig. 6 the bulge 132 of the plunger 13 covers and thus blocks the outlet orifice 119b. Accordingly no air can pass through the outlet orifice 119b and the air channel 16 is interrupted. The situation shown in Fig. 6 corresponds to a default position in which the plunger 13 is in a rearmost position and the lever is in a frontmost position. In Fig. 7 the plunger 13 is displaced further forward and the bulge 132 is positioned offset from the outlet orifice 119b. Accordingly the outlet orifice 119b is in fluid communication with a cavity 17 that is formed between the plunger 13 and the mouth part 112. The plunger 13 has an inlet orifice 139a that is in fluid communication with the second portion 139 of the air channel 16. Thus, as the first section 119 of the air channel 16 via the outlet orifice 119b is in fluid communication with the cavity 17, fluid communication is established between the first and second section 119, 139 of the air channel 16. The dispensing gun 10 therefore provides for automatically switching on the air flow as dental material is dispensed and for automatically switching the air flow off as the lever is released into the default position.

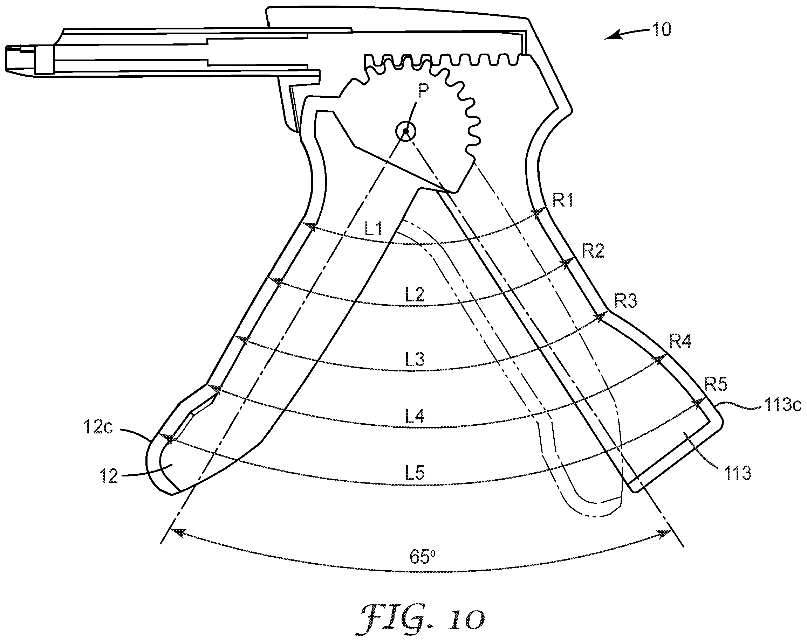

Fig. 10 illustrates an example of the dispensing gun of the invention. In particular the shape of the lever 12 and the grip 113 is specified by dimensions as follows. A radial dimension is defined by a (virtual) bundle of circles about the pivot axis P. In the Figure some of the circles are indicated by circular arcs that are designated R1-R5. These circular arcs have a radius from the pivot axis as defined in the following Table 1. Further, an arc length L1-L5 associated to the radii R1-R5, respectively, is defined between the front and rear gripping face 12c, 113c in the forward extreme position of the lever (as shown). The arc lengths L1-L5 are also given in Table 1 in association with the radii R1-R5. In this way the shape of the front and rear gripping face 12c, 113c is defined in a polar coordinate system. The invention may therefore be additionally defined by the shape of the front and rear gripping face as defined in Table 1. Thereby the arc length may be specified with a tolerance of ± 2 mm based on the values given in Table 1.

**Table 1**

| | radius | | arc length |
|---|---|---|---|
| R1= | 30 mm | L1 = | 62 mm |
| R2 = | 42.5 mm | L2 = | 74 mm |
| R3 = | 55 mm | L3 = | 88 mm |
| R4 = | 67.5 mm | L4 = | 107 mm |
| R5 = | 80 mm | L5 = | 127 mm |

## Claims

1. A dispensing gun (10) for dispensing a dental material, comprising a body (11) that toward a front end of the dispensing gun (10) has a receptacle (114) for receiving a cartridge (20) therein and toward a rear end of the dispensing gun (10) a grip (113) for holding the dispensing gun (10), the dispensing gun (10) further comprises a plunger (13) that is displaceable relative to the receptacle (114), and a lever (12) that is pivotally suspended relative to the body (11) for pivoting relative to the grip (113) about a pivot axis, the plunger (13) having a linear toothing (131) and the lever (12) having an annular gear segment (121), wherein the linear toothing (131) and the annular gear segment (121) are permanently engaged with each other so that any pivot of the lever (12) in a first direction causes the plunger (13) to displace forward and any pivot of the lever (12) in an opposite second direction causes the plunger (13) to displace backward, wherein the lever (12) is pivotable by a pivot angle between a forward extreme position and a backward extreme position and wherein the lever (12) having a front gripping face facing toward the front end and the grip (113) having a rear gripping face facing toward the rear end, wherein the front and rear gripping face extend progressively away from each other along a radial direction away from the pivot axis
wherein the linear toothing (131) and the annular gear segment (121) in combination form a gear transmission having a gear transmission ratio of 15 to 18 mm displacement of the plunger (13) per 65 degrees pivot angle of the lever (12).

2. The dispensing gun (10) of claim 1, wherein the body (11) comprises a grip part (111) and a mouth part (112) that are inseparably and rotatably connected relative to each other.

3. The dispensing gun (10) of any of the preceding claims, wherein a pivot of the lever (12) from the forward extreme position to the backward extreme position causes a displacement of the plunger (13) in the range of 15 to 18 mm.

4. The dispensing gun (10) of any of the preceding claims, further comprising a spring which is arranged to permanently urge the plunger (13) backward and to allow a forward displacement of the plunger (13) against spring load.

5. The dispensing gun (10) of claim 4, wherein the spring is arranged to act directly on at least one of the lever (12) and the plunger (13).

6. The dispensing gun (10) of any of the preceding claims, wherein the mouth part (112) has a front end comprising the receptacle (114) and a rear end comprising a retention structure (112c), wherein at least the rear end of the mouth part (112) and the retention structure (112c) are embedded in the grip part (111).

7. The dispensing gun (10) of claim 6, wherein the grip part (111) is injection-molded from a plastic material and the mouth part (112) is made of metal, and wherein the mouth part (112) is at least partially over-molded by the plastic material.

8. The dispensing gun (10) of claim 6 or 7, wherein the receptacle (114) has a slit (115) that extends into the mouth part (112).

9. The dispensing gun (10) of any of claims 3 to 7, comprising an air channel (16) having a first portion (119) extending through the body (11) and a second portion (139) extending through the plunger (13), wherein the plunger (13) and the body (11) in combination form a linear slide valve for interrupting or establishing fluid communication between the first and second portion (139) dependent on a displacement of the plunger (13).

10. The dispensing gun (10) of claim 9, wherein the fluid communication between the first (119) and second portion (139) is interrupted in the forward extreme position of the plunger (13) and established upon displacement of the plunger (13) forward.

11. A system comprising a dispensing gun (10) for dispensing a dental material as defined in any of the preceding claims and a cartridge (20), wherein the cartridge (20) comprises a chamber (24) within which the dental material is contained and a piston that closes the chamber (24), wherein the cartridge (20) further has an outlet nozzle (25) for releasing the dental material.

12. The system of claim 11, wherein the receptacle (114) of the dispensing gun (10) is configured to receive a retention end of the cartridge (20) via a snap connection.

13. A method of making a dispensing gun (10) as defined in any of the claims 1 to 10, the method comprising the steps of providing a mouth part (112) made of metal or plastic in an injection mold and over-molding at least a portion of the mouth part (112) by a plastic material.

14. The method of claim 13, further comprising the steps of providing a plunger (13) having a linear toothing (131), mounting the plunger (13) and the mouth part (112), wherein the step of over-molding is based on the mounted mouth part (112) and plunger (13).

## Patentansprüche

1. Eine Ausgabepistole (10) zum Ausgeben eines Dentalmaterials, aufweisend einen Körper (11), der zu einem vorderen Ende der Ausgabepistole (10) hin eine Aufnahme (114) zum Aufnehmen einer Kartusche (20) darin aufweist und zu einem hinteren Ende der Ausgabepistole (10) hin einen Griff (113) zum Halten der Ausgabepistole (10) aufweist, wobei die Ausgabepistole (10) ferner einen Kolben (13), der in Bezug auf die Aufnahme (114) verschiebbar ist, und einen Hebel (12), der in Bezug auf den Körper (11) zum Schwenken in Bezug auf den Griff (113) um eine Schwenkachse schwenkbar aufgehängt ist, aufweist, wobei der Kolben (13) eine lineare Verzahnung (131) aufweist und der Hebel (12) ein ringförmiges Zahnradsegment (121) aufweist, wobei die lineare Verzahnung (131) und das ringförmige Zahnradsegment (121) dauerhaft miteinander in Eingriff stehen, sodass jeder Drehpunkt des Hebels (12) in eine erste Richtung bewirkt, dass sich der Kolben (13) vorwärts verschiebt, und jeder Drehpunkt des Hebels (12) in eine entgegengesetzte zweite Richtung bewirkt, dass sich der Kolben (13) rückwärts verschiebt, wobei der Hebel (12) um einen Schwenkwinkel zwischen einer äußersten Vorwärtsposition und einer äußersten Rückwärtsposition schwenkbar ist und wobei der Hebel (12) eine vordere Greiffläche, die dem vorderen Ende zugewandt ist, aufweist und der Griff (113) eine hintere Greiffläche, die dem hinteren Ende zugewandt ist, aufweist, wobei sich die vordere und die hintere Greiffläche entlang einer radialen Richtung von der Schwenkachse progressiv voneinander von der Schwenkachse weg erstrecken,
wobei die lineare Verzahnung (131) und das ringförmige Zahnradsegment (121) in Kombination eine Getriebeübertragung, aufweisend ein Getriebeübertragungsverhältnis von 15 bis 18 mm Verschiebung des Kolbens (13) pro 65 Grad Schwenkwinkel des Hebels (12), bilden.

2. Die Ausgabepistole (10) nach Anspruch 1, wobei der Körper (11) ein Griffteil (111) und ein Mundteil (112) aufweist, die untrennbar und drehbar in Bezug aufeinander verbunden sind.

3. Die Ausgabepistole (10) nach einem der vorstehenden Ansprüche, wobei ein Drehpunkt des Hebels (12) von der äußersten Vorwärtsposition zu der äußersten Rückwärtsposition eine Verschiebung des Kolbens (13) im Bereich von 15 bis 18 mm bewirkt.

4. Die Ausgabepistole (10) nach einem der vorstehenden Ansprüche, ferner aufweisend eine Feder, die dazu angeordnet ist, den Kolben (13) dauerhaft rückwärts zu drücken und eine Vorwärtsverschiebung des Kolbens (13) gegen eine Federkraft zu ermöglichen.

5. Die Ausgabepistole (10) nach Anspruch 4, wobei die Feder dazu angeordnet ist, direkt auf mindestens eines von Hebel (12) und Kolben (13) zu wirken.

6. Die Ausgabepistole (10) nach einem der vorstehenden Ansprüche, wobei das Mundteil (112) ein vorderes Ende, aufweisend die Aufnahme (114), und ein hinteres Ende, aufweisend eine Retentionsstruktur (112c), aufweist, wobei mindestens das hintere Ende des Mundteils (112) und die
Retentionsstruktur (112c) in das Griffteil (111) eingebettet sind.

7. Die Ausgabepistole (10) nach Anspruch 6, wobei das Griffteil (111) aus einem Kunststoffmaterial spritzgegossen ist und das Mundteil (112) aus Metall hergestellt ist und wobei das Mundteil (112) von dem Kunststoffmaterial mindestens teilweise umspritzt ist.

8. Die Ausgabepistole (10) nach Anspruch 6 oder 7, wobei die Aufnahme (114) einen Schlitz (115) aufweist, der sich in das Mundteil (112) erstreckt.

9. Die Ausgabepistole (10) nach einem der Ansprüche 3 bis 7, aufweisend einen Luftkanal (16), aufweisend einen ersten Abschnitt (119), der sich durch den Körper (11) erstreckt, und einen zweiten Abschnitt (139), der sich durch den Kolben (13) erstreckt, wobei der Kolben (13) und der Körper (11) in Kombination ein lineares Schieberventil zum Unterbrechen oder Herstellen einer Fluidverbindung zwischen dem ersten und dem zweiten Abschnitt (139) abhängig von einer Verschiebung des Kolbens (13) bilden.

10. Die Ausgabepistole (10) nach Anspruch 9, wobei die Fluidverbindung zwischen dem ersten (119) und dem zweiten Abschnitt (139) in der äußersten Vorwärtsposition des Kolbens (13) unterbrochen ist und beim Vorwärtsverschieben des Kolbens (13) hergestellt wird.

11. Ein System, aufweisend eine Ausgabepistole (10) zum Ausgeben eines Dentalmaterials nach einem der vorstehenden Ansprüche und eine Kartusche (20), wobei die Kartusche (20) eine Kammer (24), innerhalb der das Dentalmaterial enthalten ist, und einen Kolben aufweist, der die Kammer (24) verschließt, wobei die Kartusche (20) ferner eine Auslassdüse (25) zum Freigeben des Dentalmaterials aufweist.

12. Das System nach Anspruch 11, wobei die Aufnahme (114) der Ausgabepistole (10) dazu konfiguriert ist, ein Retentionsende der Kartusche (20) über eine Schnappverbindung aufzunehmen.

13. Ein Verfahren zum Herstellen einer Ausgabepistole (10) nach einem der Ansprüche 1 bis 10, wobei das Verfahren die Schritte eines Bereitstellens eines Mundteils (112), das aus Metall oder Kunststoff hergestellt ist, in einer Spritzgussform und eines Umspritzens von mindestens einem Abschnitt des Mundteils (112) durch ein Kunststoffmaterial aufweist.

14. Verfahren nach Anspruch 13, ferner aufweisend die Schritte eines Bereitstellens eines Kolbens (13), der eine lineare Verzahnung (131) aufweist, eines Montierens des Kolbens (13) und des Mundteils (112), wobei der Schritt eines Umspritzens auf dem montierten Mundteil (112) und Kolben (13) basiert.

## Revendications

1. Pistolet de distribution (10) pour distribuer un matériau dentaire, comprenant un corps (11) qui, vers une extrémité avant du pistolet de distribution (10), a un réceptacle (114) pour recevoir une cartouche (20) dans celui-ci et, vers une extrémité arrière du pistolet de distribution (10), une poignée (113) pour maintenir le pistolet de distribution (10), le pistolet de distribution (10) comprend en outre un piston-poussoir (13) qui peut être déplacé par rapport au réceptacle (114), et un levier (12) qui est suspendu de manière pivotante par rapport au corps (11) pour pivoter par rapport à la poignée (113) autour d'un axe de pivotement, le piston-poussoir (13) ayant une denture linéaire (131) et le levier (12) ayant un segment d'engrenage annulaire (121), dans lequel la denture linéaire (131) et le segment d'engrenage annulaire (121) sont en prise permanente l'un avec l'autre de sorte que tout pivotement du levier (12) dans un premier sens amène le piston-poussoir (13) à se déplacer vers l'avant et tout pivotement du levier (12) dans un deuxième sens opposé amène le piston (13) à se déplacer vers l'arrière, dans lequel le levier (12) peut pivoter d'un angle de pivotement entre une position extrême avant et une position extrême arrière et dans lequel le levier (12) ayant une face de préhension avant orientée vers l'extrémité avant et la poignée (113) ayant une face de préhension arrière orientée vers l'extrémité arrière, dans lequel les faces de préhension avant et arrière s'étendent progressivement en s'écartant l'une de l'autre le long d'une direction radiale s'écartant de l'axe de pivotement,
dans lequel la denture linéaire (131) et le segment d'engrenage annulaire (121) en combinaison forment une transmission d'engrenage ayant un rapport de transmission d'engrenage d'un déplacement de 15 à 18 mm du piston-poussoir (13) pour 65 degrés d'angle de pivotement du levier (12).

2. Pistolet de distribution (10) selon la revendication 1, dans lequel le corps (11) comprend une partie de poignée (111) et une partie d'embouchure (112) qui sont reliées de manière inséparable et rotative l'une par rapport à l'autre.

3. Pistolet de distribution (10) selon l'une quelconque des revendications précédentes, dans lequel un pivotement du levier (12) de la position extrême avant à la position extrême arrière provoque un déplacement du piston-poussoir (13) dans la plage de 15 à 18 mm.

4. Pistolet de distribution (10) selon l'une quelconque des revendications précédentes, comprenant en outre un ressort qui est agencé pour solliciter en permanence le piston-poussoir (13) vers l'arrière et pour permettre un déplacement vers l'avant du piston-poussoir (13) contre la charge du ressort.

5. Pistolet de distribution (10) selon la revendication 4, dans lequel le ressort est agencé pour agir directement sur au moins un du levier (12) et du piston-poussoir (13).

6. Pistolet de distribution (10) selon l'une quelconque des revendications précédentes, dans lequel la partie d'embouchure (112) a une extrémité avant comprenant le réceptacle (114) et une extrémité arrière comprenant une structure de retenue (112c), dans lequel au moins l'extrémité arrière de la partie d'embouchure (112) et la structure de retenue (112c) sont incorporées dans la partie de poignée (111).

7. Pistolet de distribution (10) selon la revendication 6, dans lequel la partie de poignée (111) est moulée par injection à partir d'un matériau plastique et la partie d'embouchure (112) est faite de métal, et dans lequel la partie d'embouchure (112) est au moins partiellement surmoulée par le matériau plastique.

8. Pistolet de distribution (10) selon la revendication 6 ou 7, dans lequel le réceptacle (114) a une fente (115) qui s'étend dans la partie d'embouchure (112).

9. Pistolet de distribution (10) selon l'une quelconque des revendications 3 à 7, comprenant un canal d'air (16) ayant une première partie (119) s'étendant à travers le corps (11) et une deuxième partie (139) s'étendant à travers le piston-poussoir (13), dans lequel le piston-poussoir (13) et le corps (11) en combinaison forment une vanne coulissante linéaire pour interrompre ou établir une communication fluidique entre la première et la deuxième partie (139) en fonction d'un déplacement du piston-poussoir (13).

10. Pistolet de distribution (10) selon la revendication 9, dans lequel la communication fluidique entre la première (119) et la deuxième partie (139) est interrompue dans la position extrême avant du piston-poussoir (13) et établie lors du déplacement du piston-poussoir (13) vers l'avant.

11. Système comprenant un pistolet de distribution (10) pour distribuer un matériau dentaire tel que défini dans l'une quelconque des revendications précédentes et une cartouche (20), dans lequel la cartouche (20) comprend une chambre (24) au sein de laquelle est contenu le matériau dentaire et un piston qui ferme la chambre (24), dans lequel la cartouche (20) a en outre une buse de sortie (25) pour libérer le matériau dentaire.

12. Système selon la revendication 11, dans lequel le réceptacle (114) du pistolet de distribution (10) est configuré pour recevoir une extrémité de rétention de la cartouche (20) par le biais d'une liaison par encliquetage.

13. Procédé de fabrication d'un pistolet de distribution (10) tel que défini dans l'une quelconque des revendications 1 à 10, le procédé comprenant les étapes consistant à fournir une partie d'embouchure (112) faite de métal ou de plastique dans un moule d'injection et à surmouler au moins une partie de la partie d'embouchure (112) par un matériau plastique.

14. Procédé selon la revendication 13, comprenant en outre les étapes consistant à fournir un piston-poussoir (13) ayant une denture linéaire (131), à monter le piston-poussoir (13) et la partie d'embouchure (112), dans lequel l'étape de surmoulage est basée sur la partie d'embouchure (112) et le piston-poussoir (13) montés.
